# EUROPEAN PATENT SPECIFICATION

(11) **EP 2 591 393 B1**
(45) Date of publication and mention of the grant of the patent: **19.11.2014**
(21) Application number: 11722160.6
(22) Date of filing: 21.03.2011
(51) Int. Cl.: G02C 5/22, G02C 5/14

(54) **IMPROVED SPECTACLE FRAME**
VERBESSERTES BRILLENGESTELL
MONTURE DE LUNETTES AMÉLIORÉE

(30) Priority: 23.09.2010 IT RM20100491; 08.07.2010 IT RM20100374
(43) Date of publication of application: 15.05.2013
(73) Proprietor: Dimex Limited, 1703 Malta (MT)
(72) Inventor: MARIANELLO, Dino, I-01027 Montefiascone (IT)
(74) Representative: Bosman, Cesare
(86) International application number: PCT/IB2011/000599
(87) International publication number: WO 2012/004641

(56) References cited:
- EP-A1- 1 666 952
- WO-A1-00/37992
- WO-A1-02/29476
- WO-A1-2005/050288
- US-A- 2 967 325
- US-A- 5 682 222
- US-A1- 2003 009 849
- US-A1- 2004 239 873

## Description

### TECHNICAL FIELD

The present invention relates to an improved spectacle frame.

### BACKGROUND ART

To satisfy the need for a spectacle frame with temple elements capable of assuming and automatically remaining in a closed or an open position, so-called "flex temples" have been produced. Flex temples are basically temple elements connected to the frame front by means of respective elastic hinges, each of which is capable of forcing the relative temple element into a closed position, in which the temple element is arranged against the frame front; and an open position, in which the temple element is substantially orthogonal with respect to said frame front.

In general, said elastic hinges consist of a coil spring inserted into the base of the temple element and arranged so as to be compressed by the movement of a piston, a first end of which is fixed to the frame front and a second end of which is in the form of a compression head and arranged inside the temple element so as to rest against a free end of the spring. The hinge achieves a sliding profile of the temple element such as to exert a greater compression of the spring when the relative temple element is arranged in its intermediate position (at approximately 45° with respect to the frame front), and a lesser compression when the relative temple element is in the closed position (approximately 0° with respect to the frame front) or in its open position (approximately 90° with respect to the frame front). In this way, once the temple element has passed its intermediate position, it automatically moves to the open or closed position depending on the direction in which it passed said intermediate position.

However, while guaranteeing the positioning and maintenance of the temple elements in their closed or open position, such elastic hinge solution forces the user to use both hands to move the temple elements to their open position. The user must, in fact, exert a force on each of the temple elements to contrast the action of the spring and move the temple element past its intermediate position.

The need was therefore felt for a spectacle frame that could guarantee the maintenance of the temple elements in their closed position and, at the same time, enable the temple elements to be moved from their closed position to their open position by means of a simple one-handed gesture.

### DISCLOSURE OF INVENTION

The object of the present invention is a spectacle frame the essential characteristics of which are claimed in claim 1, and the preferred and/or secondary characteristics are claimed in claims 2 - 4.

### BRIEF DESCRIPTION OF THE DRAWINGS

In order to better understand the present invention, some non-limiting embodiments thereof will now be described by way of example with the help of the figures in the accompanying drawing, in which:
figure 1 is a top view of the frame according to the present invention with the temple elements arranged in a closed position;
figure 2 is a top view of the frame according to the present invention with the temple elements arranged in an open position.

### BEST MODE FOR CARRYING OUT THE INVENTION

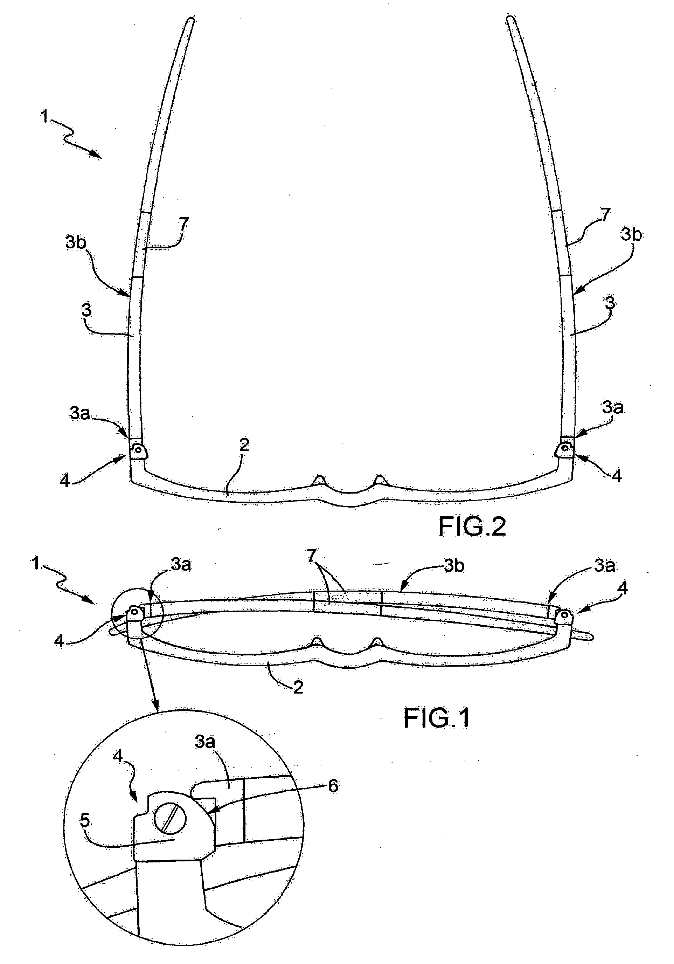

In figures 1 and 2 designated as a whole by number 1 is a spectacle frame according to a preferred embodiment of the present invention.

The spectacle frame 1 comprises a frame front 2 and two temple elements 3 each of which is hinged to the frame front 2 by means of a respective elastic hinge 4.

Each of the elastic hinges 4 comprises the spring-piston mechanism described above and known in the prior art, from which it differs with regard to the sliding profile of the base of the temple element. In particular, each hinge 4 comprises a hinge pivot 5 to which one end of the piston is connected. The piston is inserted inside the temple element according to the method known in the prior art, and is responsible for the compression of a spring. The hinge pivot 5 comprises a sliding surface 6 on which a hinged end 3a of the temple element 3 slides during the rotation thereof. The sliding surface 6 has an eccentric shape, so as to cause a gradual compression of the spring as the temple element moves from its open position to its closed position. In other words, said eccentric conformation is such as to produce a greater compression of the spring when the relative temple element is arranged in its closed position (approximately 0° with respect to the frame front) and a lesser compression when the relative temple element is arranged in its open position (approximately 90° with respect to the frame front). In this way, the temple element is automatically forced to assume its open position regardless of its initial position and, thus, even starting from the closed position.

Each temple element 3 comprises a magnet 7 arranged in a central position of said temple element 3. When the temple elements 3 are arranged in their closed position (figure 1), the magnet 7 on one temple element 3 cooperates with the magnet 7 on the other temple element 3 to keep the temple elements 3 in their closed position. The action of the magnet is able to contrast the elastic action of the hinges 4 and, thus to hold the temple elements 3 in their closed position.

In other words, the magnets exert a reversible blocking action on the temple elements 3 to hold them in their closed position. Once the blocking action of the magnets 7 is overcome, the temple elements 3 are only subject to the elastic action of the hinges 4 which, as described above, are made so as to force the temple elements 3 into their open position regardless of the position they are in.

In particular, each of the magnets 7 has a parallelepiped structure with a longitudinal through hole within which is housed a metal core sunk into the respective temple element 3 normally made of a polymeric material. Said solution guarantees the stability of the magnet 7 in the temple element 3.

The present invention also envisages other reversible blocking mechanisms that are capable of effectively fulfilling the aforesaid function, i.e. which are capable of holding the temple elements in their closed position and can be deactivated using just one hand.

Depending on the type of blocking element that is used, this may be provided on just one of the temple elements and be capable of blocking them both. For example, if the temple elements are made of a ferromagnetic material, the magnet need only be provided on one of the temple elements.

A further and secondary advantage of a preferred embodiment of the frame according to the present invention consists of the fact that the spectacles can be housed in a fixed and easily accessible place, from which they can be taken and put on with extreme ease and even using just one hand. In that connection it should be noted that each of the magnets 7 also has a second function that is independent of the reversible blocking function described above, namely the function of reversibly attaching the entire frame 1 to a ferromagnetic surface.

Each of the magnets 7 faces an outer surface 3b of the respective temple element 3, and when the temple elements 3 are in their closed position and held in that position due to the cooperation of said magnets 7, the frame 1 can be attached to a ferromagnetic surface due to the action of one of the two magnets 7 on the temple element arranged externally in the closed position. In this way, the frame 1 in its closed position remains firmly attached to a ferromagnetic surface.

When the user takes hold of the frame 1 to detach it from the ferromagnetic surface, the force of attraction between the magnet 7, holding the frame in place, and said ferromagnetic surface exerts sufficient force to contrast the blocking action between the magnets 7 of the two temple elements 3, and the elastic action of the hinges moves said temple elements 3 to their open position.

In other words, when the user removes the frame 1 from the ferromagnetic surface he exerts a force such as to overcome the magnetic force between the magnet 7 and the ferromagnetic surface to which it is magnetically attached while, at the same time, the magnetic force between the magnet 7 and the ferromagnetic surface is such as to overcome the magnetic force between the two magnets 7 and thus automatically cause the temple elements 3 to open under the action of the elastic hinges 4.

In this way, when removed from the ferromagnetic surface the spectacles are ready to be worn without the need for any additional manoeuvres.

According to the present invention, each of the temple elements 3 may comprise a magnet that faces one of the outer surfaces 3b thereof and is provided for the exclusive purpose of attaching the frame to a ferromagnetic surface, while the action of blocking the temple elements 3 in their closed position is performed by different means that may or may not involve a magnetic action.

The above-mentioned ferromagnetic surface may consist of a metal sheet arranged in a fixed and easily accessible position. For instance, a pair of sunglasses could be attached to a sheet arranged on the dashboard of the vehicle when the driver does not need them, so as to be readily available as and when required, and easy for the driver to put on.

Another example of a ferromagnetic surface could be a metal sheet arranged on a desk, on the side of a computer or on the outside of a briefcase, etc.

The frame according to the present invention has the advantage that it can be attached to a fixed place from which the user can pick it up, using just one hand and automatically causing the temple elements to open, making it extremely easy for him to put the spectacles on.

Since the spectacles can be attached to a fixed and selected surface from which they can be picked up conveniently and safely, this can help to prevent them from being lost and/or damaged.

## Claims

1. Spectacle frame (1) comprising a frame front (2) in which two lenses are fixed, and a pair of temple elements (3) connected to the frame front (2) by means of two respective elastic hinges (4) made so as to force said temple elements (3) into their open position regardless of the initial position of said temple elements (3); said spectacle frame (1) being **characterised in that** each hinge (4) comprises a hinge pivot (5) comprising a sliding surface (6) on which a hinged end (3a) of the respective temple element (3) slides during a rotation thereof; said sliding surface (6) having an eccentric shape so as to cause a gradual increase in the tension of the elastic hinge when the respective temple element passes from its open position to its closed position; and **in that** said temple elements comprise respective magnets (7) arranged in a central portion of thereof and suitable to cooperate with one another to contrast the elastic action of the hinges (4) and hold the temple elements in their closed position if no additional external force is applied; each of the magnets (7) having a through hole within which is housed a metal core sunk into the respective temple element (3), wherein each of said hinges (4) comprises a coil spring inserted into the temple element and arranged so as to be compressed by the movement of a piston during the rotation of the respective temple element.

2. Spectacle frame according to claim 1, **characterised in that** at least one of the two temple elements (3) comprises a magnet (7) which faces an outer surface thereof (3b) so as to reversibly attach the spectacle frame to a ferromagnetic housing surface.

3. Spectacle frame according to claim 2 **characterised in that** a single magnet (7) has both the function of reversibly blocking the temple elements (3) and of reversibly attaching the spectacle frame to a ferromagnetic housing surface.

4. Assembly comprising a spectacle frame (1) as claimed in claim 2 or 3 and a ferromagnetic housing surface to which said spectacle frame (1) can be reversibly attached.

## Patentansprüche

1. Brillengestell (1), umfassend eine Gestellvorderseite (2), in der zwei Gläser befestigt sind, und ein Paar Schläfenelemente (3), die mit der Gestellvorderseite (2) mittels zwei entsprechenden elastischen Scharnieren (4) verbunden sind, die derart ausgebildet sind, dass sie die Schläfenelemente (3) unabhängig von der Anfangsposition der Schläfenelemente (3) in ihre offene Position zwingen; wobei das Brillengestell (1) **dadurch gekennzeichnet ist, dass** jedes Scharnier (4) einen Scharnierzapfen (5) umfasst, der eine Gleitfläche (6) umfasst, auf der ein Scharnierende (3a) des jeweiligen Schläfenelements (3) während einer Drehung desselben gleitet; wobei die Gleitfläche (6) eine exzentrische Form aufweist, um eine graduelle Erhöhung der Spannung des elastischen Scharniers zu bewirken, wenn das jeweilige Schläfenelement von seiner offenen Position in seine geschlossene Position übergeht; und dass die Schläfenelemente entsprechende Magnete (7) umfassen, die in einem mittleren Abschnitt derselben angeordnet sind und geeignet sind, um miteinander zusammenzuwirken, um der elastischen Wirkung der Scharniere (4) entgegenzuwirken und die Schläfenelemente in ihrer geschlossenen Position zu halten, falls keine zusätzliche externe Kraft ausgeübt wird; wobei jeder der Magneten (7) ein Durchgangsloch aufweist, in dem ein Metallkern aufgenommen ist, der in das jeweilige Schläfenelement (3) versenkt ist, wobei jedes der Scharniere (4) eine Schraubenfeder umfasst, die in das Schläfenelement eingefügt und derart angeordnet ist, dass sie durch die Bewegung eines Kolbens während der Drehung des jeweiligen Schläfenelements zusammengedrückt wird.

2. Brillengestell nach Anspruch 1, **dadurch gekennzeichnet, dass** mindestens eines der beiden Schläfenelemente (3) einen Magneten (7) umfasst, der einer Außenfläche (3b) derselben zugewandt ist, um das Brillengestell umkehrbar an einer ferromagnetischen Aufnahmefläche anzubringen.

3. Brillengestell nach Anspruch 2, **dadurch gekennzeichnet, dass** ein einziger Magnet (7) sowohl die Funktion des umkehrbaren Blockierens der Schläfenelemente (3) als auch des umkehrbaren Anbringens des Brillengestells an einer ferromagnetischen Aufnahmefläche hat.

4. Baugruppe, umfassend ein Brillengestell (1) nach Anspruch 2 oder 3 und eine ferromagnetische Aufnahmefläche, an der das Brillengestell (1) umkehrbar angebracht werden kann.

## Revendications

1. Monture de lunettes (1) comprenant un avant de monture (2) dans lequel sont fixés deux verres, et une paire d'éléments formant branches (3) raccordés à l'avant de monture (2) au moyen de deux charnières élastiques (4) respectives conçues de façon à forcer lesdits éléments formant branches (3) dans leur position ouverte indépendamment de la position initiale desdits éléments formant branches (3) ; ladite monture de lunettes (1) étant **caractérisée en ce que** chaque charnière (4) comprend un pivot de charnière (5) comprenant une surface de coulissement (6) sur laquelle coulisse une extrémité articulée (3a) de l'élément formant branche (3) respectif pendant une rotation de celui-ci ; ladite surface de coulissement (6) ayant une forme excentrique de façon à provoquer une augmentation progressive de la tension de la charnière élastique lorsque l'élément formant branche respectif passe de sa position ouverte à sa position fermée ; et **en ce que** lesdits éléments formant branches comprennent des aimants (7) respectifs disposés à une position centrale de ceux-ci et appropriés pour coopérer entre eux pour contrer l'action élastique des charnières (4) et maintenir les éléments formant branches dans leur position fermée si aucune force externe additionnelle n'est appliquée ; chacun des aimants (7) ayant un trou traversant dans lequel est logé un noyau métallique noyé dans l'élément formant branche (3) respectif, chacune desdites charnières (4) comprenant un ressort hélicoïdal inséré dans l'élément formant branche et conçu pour être compressé par le déplacement d'un piston pendant la rotation de l'élément formant branche respectif.

2. Monture de lunettes selon la revendication 1, **caractérisée en ce que**, au moins l'un des deux éléments formant branches (3) comprend un aimant (7) qui fait face à une surface extérieure (3b) de celui-ci de façon à attacher de manière réversible la monture de lunettes à un surface de logement ferromagnétique.

3. Monture de lunettes selon la revendication 2, **caractérisée en ce qu'**un seul aimant (7) a les deux fonctions de blocage réversible des éléments formant branches (3) et d'attachement réversible de la monture de lunettes à une surface de logement ferromagnétique.

4. Ensemble comprenant une monture de lunettes (1) selon la revendication 2 ou 3 et une surface de logement ferromagnétique à laquelle ladite monture de lunettes (1) peut être attachée de manière réversible.
